Europäisches Patentamt

European Patent Office

Office européen des brevets

(19)

(11) Publication number: **0 130 636**
**B1**

(12) **EUROPEAN PATENT SPECIFICATION**

(45) Date of publication of patent specification: **09.09.87**

(51) Int. Cl.⁴: **G 11 B 17/04**

(21) Application number: **84200838.5**

(22) Date of filing: **13.06.84**

(54) **Record player having a loading mechanism for loading a record disk.**

(30) Priority: **15.06.83 NL 8302131**

(43) Date of publication of application:
**09.01.85 Bulletin 85/02**

(45) Publication of the grant of the patent:
**09.09.87 Bulletin 87/37**

(84) Designated Contracting States:
**CH DE FR GB IT LI**

(56) References cited:
**DE-A-3 026 432**
**GB-A-1 160 937**
**GB-A-2 030 343**
**US-A-2 905 475**
**US-A-4 272 794**

**PATENTS ABSTRACTS OF JAPAN, vol. 6, no. 229 (P-155)1107r, 16th November 1982, page 84 P 155; & JP - A - 57 130 260 (PIONEER K.K.) 12-08-1982**

(73) Proprietor: **N.V. Philips' Gloeilampenfabrieken**
**Groenewoudseweg 1**
**NL-5621 BA Eindhoven (NL)**

(72) Inventor: **Schuitmaker, Pieter Douwe**
**c/o INT. OCTROOIBUREAU B.V. Prof. Holstlaan 6**
**NL-5656 AA Eindhoven (NL)**
Inventor: **Rietbergen, Wilhelmus Petrus C.**
**c/o INT. OCTROOIBUREAU B.V. Prof. Holstlaan 6**
**NL-5656 AA Eindhoven (NL)**

(74) Representative: **Smit, Frederik Jan et al**
**INTERNATIONAAL OCTROOIBUREAU B.V. Prof. Holstlaan 6**
**NL-5656 AA Eindhoven (NL)**

Courier Press, Leamington Spa, England.

## Description

The invention relates to a record player having a loading mechanism for loading a record disk onto the turntable of the record player, the player comprising a housing and a frame which occupies a fixed position therein and in which the turntable is rotatably supported, and the loading mechanism comprising a drawer which is rectilinearly retractable and extensible through a front opening in the housing between an opened and a closed position and which carries a platform for carrying a disk to the turntable, the loading mechanism further comprising a pressure lever which carries a pressure member for urging the disk against the turntable and which is pivotable in upward and downward directions about a shaft extending at right angles to the path of movement of the drawer.

A known record player of the above kind is the type CDP—101 record player manufactured by the Japanese firm Sony. Such a record player is intended to play optically readable audio-disks of the "Compact Disc" type. In this known record player there is provided in the platform a complicated lifting device comprising a plurality of cams, which device causes the disk to be lowered onto the turntable after the platform has been moved to a position above the turntable. For the control of the various movements of the drawer, the platform and the lifting device, the loading mechanism of the known record player is provided with various driving mechanisms, such as electric motors, and with control electronics, as a result of which the construction of the loading mechanism of the known record player is complicated and voluminous.

The invention has for its object to provide the record player of the above kind having a simple, compact mechanically operating loading mechanism.

According to the invention, a record carrier of the said kind is therefore characterized in that the drawer has side walls which which are formed grooves or slots extending obliquely downwards in the forward direction, in that the platform is movable in the grooves or slots with respect to the drawer between an upper position and a lower position, the platform being located below the level of the upper side of the turntable when in the lower position, in that during a first part of the inward movement of the drawer the platform is held in the upper position in the grooves or slots by at least one positioning member, in that during a second part of the inward movement of the drawer the platform is urged against at least one abutment stop and performs a substantially vertical movement in the grooves or slots to the lower position with respect to the turntable and in that during this movement of the platform the pressure lever is engaged with the platform and is pivoted thereby in the downward direction.

Thus, a purely mechanically operating loading mechanism is obtained which comprises a small number of component parts and in which a reliable control of the platform and the pressure lever with respect to the turntable is obtained by means of the grooves or slots, the positioning member and the stop. Due to the small number of component parts the drawer can be of compact construction and have a small width and height, which is favourable for the construction of the front part of the housing of the record player since the front opening in the housing can have correspondingly small dimensions and thus have more space available for operating keys and other members which are located on the front part of the housing.

A preferred embodiment of a record player according to the invention is characterized in that the stop is constituted by a projection on the pressure lever and the platform is provided with a hook which during the second part of the inward movement of the drawer is engaged with said projection. Thus, two functions are combined in the stop, namely, control of the platform in the grooves or slots and causing the pressure lever to move downwards. As a result, it can be ensured that the relative directions of movement of the platform and the pressure lever match accurately.

A preferred embodiment of a record player according to the invention is further characterized in that the positioning member is constituted by a spring which is connected at its ends to the platform and the drawer, respectively, and which, during a first part of the inward movement of the drawer, causes the platform to move to the upper position in the grooves or slots. In this manner a positioning member is obtained which on the one hand holds the platform in the upper position in a reliable manner during the first part of the inward movement of the drawer and on the other hand, at the end of the first part of the outward movement of the drawer, causes the platform to move in an effective manner from the lower position back to the upper position.

A preferred embodiment of a record player according to the invention is further characterized in that the pressure lever is disengaged from the platform during a second part of the outward movement of the drawer and, after the pressure lever has been disengaged from the platform, it is positioned against at least one stop in the upward direction so that the hook on the platform can again engage with said projection on the pressure lever during the next inward movement of the drawer. Thus, the pressure lever with the stop is in the correct position for engagement with the platform during the first part of the inward movement of the drawer.

The invention will now be described more fully with reference to an embodiment of a record player according to the invention which is shown in the drawings, but to which the invention is not limited. In the drawings:

Figure 1 is a partly cut-away perspective view of a record player according to the invention, showing the drawer in the extended position;

Figure 2 is a diagrammatic side elevation of this record player drawn to a reduced scale and again showing the drawer in the extended position;

Figure 3 is a diagrammatic side elevation of the record player showing the drawer at the beginning of the second part of its inward movement;

Figure 4 is a side elevation of the record player showing the drawer fully retracted.

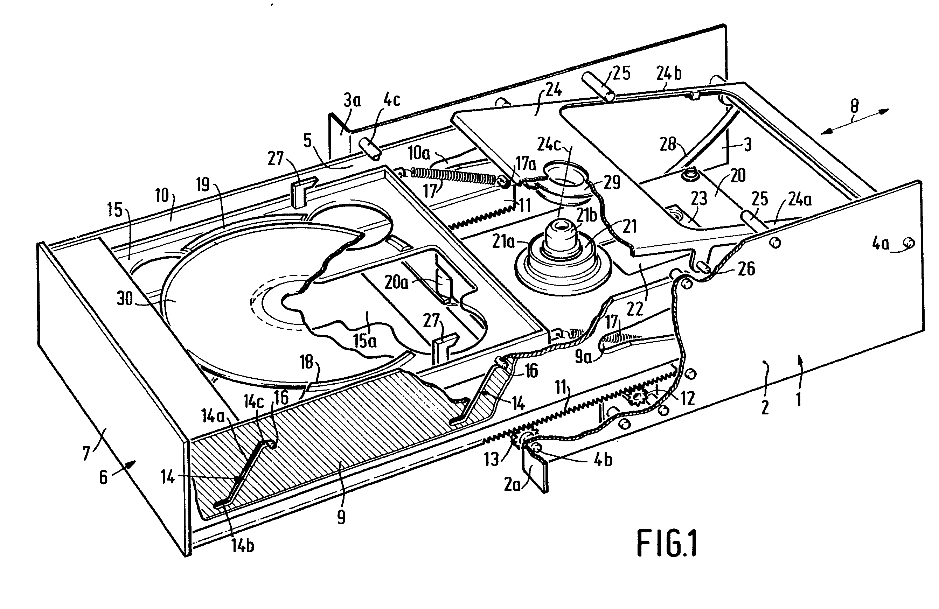

The record player shown in Figure 1 comprises a housing 1 with upright side walls 2 and 3 which are connected at the front to front wall portions 2a and 3a, respectively. The side walls 2 and 3 are interconnected by three rods 4a, 4b and 4c, which give the housing the required rigidity. The front walls 2a and 3a and the rods 4b and 4c bound a front opening 5 of the housing, through which opening a drawer 6 can be moved rectilinearly between a retracted closed position and an extended open position. Alternatively, the drawer may be slidably supported in a manner, not shown.

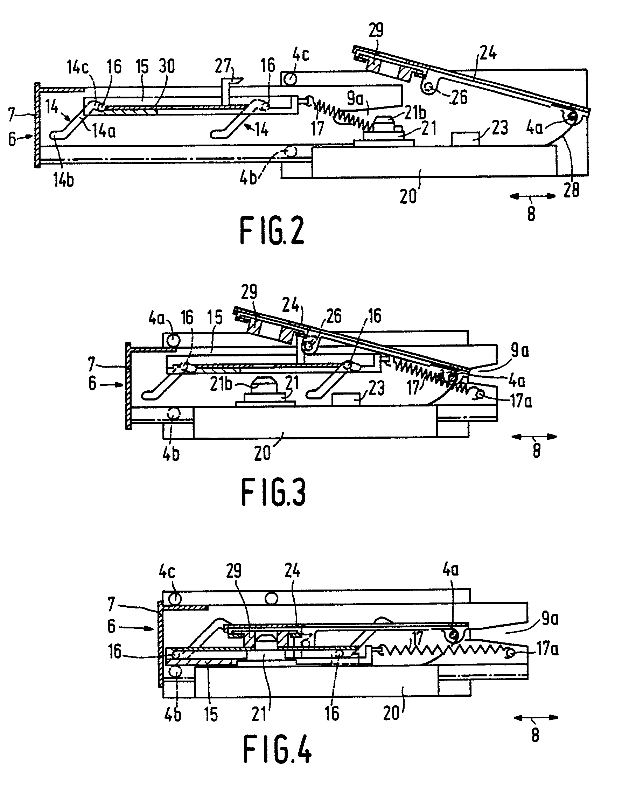

The drawer 6 has a front wall 7 which, when the drawer is in the closed position shown in Figure 4, covers the front opening 5. The direction of movement of the drawer is indicated by the double arrow 8. The front wall 7 is connected to upright side walls 9 and 10 of the drawer 6, which side walls are provided on their lower edges with toothed racks 11 meshing with toothed pinions 12 which are coupled to a driving motor in a manner not shown. A further pair of pinion 13 is provided on the rod 4b near the front of the housing ensure a stable guidance of the drawer. If desired, instead of a movement by means of a driving motor, the movement of the drawer may also be effected purely automatically, in which case the rod 4b is surrounded by a torsion spring which is stressed when the drawer is retracted and relaxed when the drawer is extended, a locking mechanism (not shown) being provided to lock the drawer in the closed position. In this case, the toothed pinions 12 may be provided with a damping coupling for damping the outward movement of the drawer 6. The side walls 9 and 10 are provided with recesses 9a and 10a, respectively, in their near ends, which recesses, as is shown in Figures 3 and 4, accommodate the rod 4a during a second part of the inward movement of the drawer 6. In the inner side of each of the side walls 9 and 10 is formed a pair of grooves 14 which extend parallel to each other. The side walls may be formed with slots instead of grooves. The grooves 14 (or slots) each comprise a main part 14a extending obliquely downwards in the forward direction (i.e., towards the front of the drawer), a lower end part 14b extending substantially horizontally forwards from the main part and an upper end part 14c which extends from the main part 14a obliquely downwards in the rearward direction.

The drawer 6 carries a platform 15 which is guided in the grooves 14 by means of pins 16 projecting from the platform 15 and engaging slidably in the grooves. In the extended position of the drawer shown in Figures 1 and 2, the pins 16 are positioned at the ends of the upper end parts 14c of the grooves 14 under the influence of tension springs 17 which are connected to the rear side of the platform 15 and to supports 17a located near the rear ends of the side walls 9 and 10. Thus, the springs 17 act as positioning means to hold the platform 15 in a stable manner in an upper position when the drawer is open. The platform 15 has on its upper side a disk-supporting surface which near the side walls 9 and 10 is bounded by arcuate disk-positioning ridges 18 and 19 with sloping inner walls intended for centering a record disk 30 as it is being placed on the platform 15. The platform is provided with a number of openings, of which an opening 15a has a particular function.

By means of rubber feet 20a, a frame 20 is resiliently supported inside the housing 1. The frame 20 carries a turntable 21 which is rotatably supported in the frame and which is driven from the frame 20 by a drive motor in a manner not shown. The turntable 21 has at its circumference a disk-supporting rim 21a and on its upper side a centering cone 21b. The frame 20 is further provided with an opening 22 which extends in a radial direction with respect to the turntable 21 and in which an optical read head 23 is movable in the radial direction when playing a record disk.

The rod 4a, which extends at right angles to the path of movement of the drawer 6, also serves as a pivot shaft for a pressure lever 24 having two limbs 24a and 24b which, in the position shown in Figures 1 and 2, stops constituted by pins 25 connected to the side walls 2 and 3, respectively, of the housing, to position the pressure lever in the upward direction. The limbs 24a and 24b are formed with lugs which each carry a projection in the form of a pin 26. The pins 26 constitute stops for two hooks 27 which are fired on the upper side of the platform 15 and which at the end of a first part of the inward movement of the drawer 6, during which the disk 30 is carried on the platform 15 to a position directly above the turntable, abut and engage over the pins 26 to couple the pressure lever 24 to the platform. With the engagement of the hooks 27 with the pins 26, the positioning effect of the springs 17 on the platform 15 is interrupted, as a result of which, during a second part of the inward movement of the drawer 6, the pins 16 move downwards in the grooves 14 from the upper position to a lower position in the lower end parts 14b of the grooves. At the instant at which the hooks 27 engage over the pins 26, the platform 15 arrives at the correct position directly above the turntable 21. During the second part of the inward movement of the drawer, as the platform 15 is lowered the pressure lever 24 is pulled downwards about the pivot shaft 4a by the hooks 27 against the action of leaf springs 28. As a result of the downward movement of the platform 15 the upper side of the platform is brought below the level of the upper side of the turntable 21. During this movement of the platform the disk 30 is centered on the centering cone 21b and is left supported on the turntable 21 by the descending platform 15. During the remainder of the movement of the pins 16 in the main parts 14a of the grooves 14, the platform is moved to a lower position and the pressure lever 24 is pivoted further to bring a pressure member 29 carried by a main part 24c of the lever into engagement with the disk 30 to urge the disk against the turntable 21. At the end of its movement the platform 15 is positioned in a stable manner with the pins 16 at the ends of the lower end parts 14b of the grooves 14.

For opening the drawer 6, a key (not shown) on the housing 1 is depressed to bring the drive into operation in the opposite direction to move the drawer outwards. During a first part of the outward movement of the drawer the platform 15 moves upwards substantially vertically with respect to the turntable 21, the pressure lever 24 being pivoted upwards at the same time by the springs 28. The upward movement of the platform is brought about by the action of the springs 17, which cause the pins 16 to move upwards in the grooves 14, assisted by the leaf-springs 28, which pivot the pressure lever 24 upwards. At the end of the pivotal movement the limbs 24a and 24b of the pressure lever 24 again abut the pins 25, so that the pins 26 on the limbs 24a and 24b, from which pins the hooks 27 on the platform 15 and disengaged during a second part of the outward movement of the drawer 6, are positioned again for engagement by the hooks 27 during the next inward movement of the drawer. At the end of the first part of the outwrd movement of the drawer the platform 15 is again positioned in a stable manner with the pins 16 in the upper end parts 14c of the grooves 14. At the end of the outward movement it is readily possible due to the presence of the afore-mentioned openings in the platform 15 to pick up the disk 30 by holding it at the edge between a thumb and forefinger and to remove the disk from the platform and place another disc on the platform.

The loading mechanism comprising the drawer 6, the platform 15 and the pressure lever 24 ensures that a disk to be loaded is transported along an accurately defined path and is moved down onto the turntable in the correct position in a substantially vertical direction. The described construction of a loading mechanism for a record player has the advantage that it can be compact and simple, while the various movements are performed purely mechanically. The described loading mechanism is particularly suitable for the use in record players for playing optical audio-disks of the "Compact Disc" type, which record players are suitable, due to the introduction of the disk in a horizontal position through a front opening in the housing, to be incorporated in a stacked assembly of audio equipment or in a space which is very limited in the vertical direction, for example, between two book-shelves.

**Claims**

1. A record player having a loading mechanism for loading a record disk (30) onto the turntable (21) of the record player, the player comprising a housing (1) and a frame (20) which occupies a fixed position therein and in which the turntable is rotatably supported, and the loading mechanism comprising a drawer (6) which is rectilinearly rectractable and extensible through a front opening (5) in the housing between an opened and a closed position and which carries a platform (15) for carrying a disk to the turntable, the loading mechanism further comprising a pressure lever (24) which carries a pressure member (29) for urging the disk against the turntable and which is pivotable in upward and downward directions about a shaft extending at right angles to the path of movement of the drawer, characterized in that

— the drawer has side walls (9, 10) in which are formed grooves (14) (or slots) extending obliquely downwards in the forward direction,

— the platform is movable in the grooves or slots with respect to the drawer between an upper position and a lower position, the platform being located below the level of the upper side of the turntable when in the lower position.

— during a first part of the inward movement of the drawer the platform is held in the upper position in the grooves or slots by at least one positioning member,

—during a second part of the inward movement of the drawer, and the platform is urged against at least one stop and performs a substantially vertical movement in the grooves or slots to the lower position with respect to the turntable and

— during this movement of the platform the pressure lever is engaged with the platform and is pivoted thereby in the downward direction.

2. A record player as claimed in Claim 1, characterized in that the stop is constituted by a projection (26) on the pressure lever (24) and the platform (15) is provided with a hook (27) which, during the second part of the inward movement of the drawer (6), is engaged with said projection.

3. A record player as claimed in Claim 1 or 2, characterized in that the positioning member is constituted by a spring (17) which is connected at its ends to the platform (15) and the drawer (6), respectively, and which, during a first part of the outward movement of the drawer, causes the platform to move to the upper position in the grooves or slots.

4. A record player as claimed in Claims 2 and 3, characterized in that the pressure lever (24) is disengaged from the platform (15) during a second part of the outward movement of the drawer (6) and, after disengagement from the platform, is positioned against at least one stop in the upward direction so that during the next inward movement of the drawer the hook (27) on the platform can again engage with said projection (26) on the pressure lever.

**Patentansprüche**

1. Plattenspieler mit einem Lademechanismus zum Laden einer Aufzeichnungsplatte (30) auf den Plattenteller (21) des Plattenspielers, wobei der Plattenspieler ein Gehäuse (1) und ein darin eine ortsfeste Lage einnehmendes Gestell (20) aufweist, in dem der Plattenteller drehbar gelagert ist, wobei der Lademechanismus einen durch eine Frontöffnung (5) in dem gehäuse zwischen einer geöffneten und einer geschlossenen Lage geradlinig ein- und ausschiebbaren Schubladen (6) aufweist, der eine Plattform (15) trägt zum dem Plattenteller zuführen einer Platte, wobei der Lademechanismus weiterhin einen in der Auf- und Abwärtsrichtung um eine Achse senkrecht zu der Bewegungsrichtung des Schubladens schwenkbaren Anpresshebel (24) mit einem Anpresselement (29) aufweist, dadurch gekennzeichnet, dass

— der Schubladen Seitenwände (9, 10) aufweist, in denen sich in der Vorwärtsrichtung schräg nach unten erstreckende Rillen (14) (oder Schlitze) gebildet sind,

—die Plattform gegenüber dem Schubladen zwischen einer oberen und einer unteren Lage in den Rillen bzw. Schlitzen beweglich ist, wobei die Plattform in der unteren Lage sich unterhalb des Pegels der Oberseite des Plattentellers befindet,

— die Plattform während eines ersten Teils der Einwärtsbewegung des Schubladens durch wenigstens ein Positionierungselement in der oberen Lage in den Rillen bzw. Schlitzen gehalten wird,

—die Plattform während eines zweiten Teils der Einwärtsbewegung des Schubladens gegen wenigstens ein Anschlagelement gedrückt wird und gegenüber dem Plattenteller eine im wesentlichen vertikale Bewegung in den Rillen bzw. Schlitzen in die untere Lage macht und

—der Anpresshebel während dieser Bewegung der Plattform mit derselben gekuppelt ist und dadurch in der Abwärtsrichtung geschwenkt wird.

2. Plattenspieler nach Anspruch 1, dadurch gekennzeichnet, dass das Anschlagelement durch einen Vorsprung (26) auf dem Anpresshebel (24) gebildet wird und die Plattform (15) mit einem Haken (27) versehen ist, der während des zweiten Teils der Einwärtsbewegung des Schubladens (6) mit dem genannten Vorsprung gekuppelt ist.

3. Plattenspieler nach Anspruch 1 oder 2, dadurch gekennzeichnet, dass das Positionierungselement durch eine Feder (17) gebildet wird, deren Enden mit der Plattform (15) bzw. dem Schubladen (6) verbunden sind, wobei die Feder während des ersten Teiuls der Auswärtsbewegung des Schubladens die Plattform in die obere Lage in den Rillen bzw. Schlitzen bewegt.

4. Plattenspieler nach Anspruch 2 und 3, dadurch gekennzeichnet, dass der Anpresshebel (24) während eines zweiten Teils der Auswärtsbewegung des Schubladens (6) und nach Entkupplung der Plattform gegen wenigstens ein Anschlagelement in der Aufwärtsrichtung gebracht wird, so dass während der nächsten Einwärtsbewegung der Haken (27) auf der Plattform wieder mit dem genannten Vorsprung (26) auf dem Anpresshebel gekuppelt werden kann.

**Revendications**

1. Lecteur de disques comportant un mécanisme de chargement destiné à charger un disque d'enregistrement (30) sur le plateau tourne-disque (21) du lecteur, ce lecteur comprenant un boîtier (1) et un bâti (20) qui occupe une position fixe dans ce boîtier et dans lequel le plateau est monté à rotation, et le mécanisme de chargement comprenant un tiroir (6) qui peut être rétracté et étendu en ligne droite à travers une ouverture antérieure (5) prévue dans le boîtier, entre un position d'ouverture et une position de fermeture, et qui porte un plate-forme (15) destinée à amener un disque au plateau tourne-disque, le mécanisme de chargement comprenant, en outre, un levier de pression (24) qui porte un organe presseur (29) destiné à solliciter le disque contre le plateau tourne-disque et qui peut pivoter ves le haut et vers le bas autour d'un axe qui s'étend perpendiculairement au trajet parcouru par le tiroir, caractérisé en ce que

— le tiroir comporte des parois latérales (9, 10) dans lesquelles sont ménagées des rainures (14) (ou des fentes) qui s'étendent obliquement vers le bas vers l'avant,

— la plate-form est mobile dans les rainures ou les fentes par rapport au tiroir entre une position supérieure et un position inférieure, cette plate-forme étant disposée en dessous du niveau de la face supérieure du plateau tourne-disque lorsqu'elle se trouve dans sa position inférieure,

—pendant une première partie du déplacement vers l'intérieure du tiroir, la plate-forme est maintenue dans la position supérieure dans les rainures ou fentes par au moins un organe positionneur,

—pendant une deuxième partie du déplacement vers l'intérieur du tiroir, la plate-forme est sollicitée contre au moins un arrêt de butée et effectue un déplacement en substance vertical dans les rainures ou les fentes vers la position inférieure par rapport au plateau, et

—pendant ce déplacement de la plate-forme, le levier de pression est engagé avec la plate-forme et pivote ainsi vers le bas.

2. Lecteur de disques suivant la revendication 1, caractérisé en ce que l'arrêt de butée est constitué par une saillie (26) prévue sur le levier de pression (24) et la plate-forme (15) est pourvue d'un crochet (27) qui, pendant la deuxième partie du déplacement vers l'intérieur du tiroir (6), vient en prise avec la saillie.

3. Lecteur de disques suivant la revendication 1 ou 2, caractérisé en ce que l'organe positionneur est constitué par un ressort (17) qui est relié à ses extrémités à la plate-forme (15) et au tiroir (6) respectivement et qui, pendant une première partie du déplacement vers l'extérieur du tiroir, force la plateforme à se déplacer vers la position supérieure dans les rainures ou les fentes.

4. Lecteur de disques suivant les revendications 2 et 3, caractérisé en ce que le levier de pression (24) est dégagé de la plate-form (15) pendant une deuxième partie du déplacement vers l'extérieur du tiroir (6) et, après qu'il se soit dégagé de la plate-forme, il est positionné contre au moins un arrêt vers le haut, de telle sorte que pendant le déplacement vers l'intérieure suivant du tiroir, le crochet (27) sur la plate-forme puisse à nouveau venir en prise avec la saillie (26) du levier de pression.

FIG.1

0 130 636

FIG.2

FIG.3

FIG.4